# EUROPEAN PATENT SPECIFICATION

(11) **EP 4 273 970 B1**
(45) Date of publication and mention of the grant of the patent: **11.02.2026**
(21) Application number: 22856125.4
(22) Date of filing: 05.08.2022
(51) Int. Cl.: H01M 4/86, H01M 4/90, H01M 8/1004, H01M 8/10

(54) **ELECTRODE FOR FUEL CELL COMPRISING NON-PLATINUM CATALYST AND GRAPHENE LAYERED STRUCTURE, AND MEMBRANE-ELECTRODE ASSEMBLY COMPRISING SAME**
ELEKTRODE FÜR BRENNSTOFFZELLE MIT PLATINFREIEM KATALYSATOR UND GRAPHENSCHICHTSTRUKTUR SOWIE MEMBRANELEKTRODENANORDNUNG DAMIT
ÉLECTRODE POUR PILE À COMBUSTIBLE COMPRENANT UN CATALYSEUR SANS PLATINE ET UNE STRUCTURE EN COUCHES DE GRAPHÈNE, ET ENSEMBLE MEMBRANE-ÉLECTRODE LA COMPRENANT

(30) Priority: 13.08.2021 KR 20210107386; 04.08.2022 KR 20220097439
(43) Date of publication of application: 08.11.2023
(73) Proprietor: Kolon Industries, Inc., Seoul 07793 (KR)
(72) Inventor: KIM, Hyeong Su, Seoul 07793 (KR); KIM, Jun Young, Seoul 07793 (KR); KONG, Nak Won, Seoul 07793 (KR); KIM, Jung Ho, Seoul 07793 (KR); LEE, Ju Sung, Seoul 07793 (KR); PARK, Chan Mi, Seoul 07793 (KR)
(74) Representative: Vossius & Partner Patentanwälte Rechtsanwälte mbB
(86) International application number: PCT/KR2022/011709
(87) International publication number: WO 2023/018126

(56) References cited:
- KR-A- 20090 130 664
- KR-A- 20110 070 353
- KR-A- 20110 070 353
- KR-A- 20170 088 156
- XU QIAN ET AL: "Constructing a graphene-contained layer in anode to improve the performance of direct methanol fuel cells using high-concentration fuel", INTERNATIONAL JOURNAL OF GREEN ENERGY, vol. 18, no. 6, 27 December 2020 (2020-12-27), US, pages 566 - 577, XP093034727, ISSN: 1543-5075, DOI: 10.1080/15435075.2020.1865374
- XU QIAN, SUN WEI, ZHANG JIAJIA, ZHANG WEIQI, MA QIANG, SU HUANENG, XING LEI: "Constructing a graphene-contained layer in anode to improve the performance of direct methanol fuel cells using high-concentration fuel", INTERNATIONAL JOURNAL OF GREEN ENERGY, TAYLOR & FRANCIS INC., US, vol. 18, no. 6, 3 May 2021 (2021-05-03), US , pages 566 - 577, XP093034727, ISSN: 1543-5075, DOI: 10.1080/15435075.2020.1865374
- JANG SEGEUN; SEOL CHANGWOOK; KANG YUN SIK; KIM SANG MOON; YOO SUNG JONG: "Investigation of the effect of carbon-covering layer on catalyst layer in polymer electrolyte membrane fuel cell in low relative humidity condition", JOURNAL OF POWER SOURCES, ELSEVIER, AMSTERDAM, NL, vol. 436, 9 July 2019 (2019-07-09), AMSTERDAM, NL, XP085761240, ISSN: 0378-7753, DOI: 10.1016/j.jpowsour.2019.226823

## Description

### [Technical Field]

The present invention relates to a fuel cell electrode which has improved performance and durability while using expensive platinum, a method for manufacturing the fuel cell electrode, a membrane-electrode assembly including the fuel cell electrode, and a fuel cell comprising the membrane-electrode assembly.

### [Background Art]

A fuel cell is a battery equipped with a power generation system that directly converts chemical reaction energy in reactions such as an oxidation/reduction reaction of hydrogen and oxygen contained in hydrocarbon-based fuel materials such as methanol, ethanol, and natural gas into electrical energy, and is spotlighted as a next-generation clean energy source that can replace fossil energy due to its high energy efficiency and eco-friendly characteristics with low pollutant emissions.

Such a fuel cell has the advantage of being able to produce a wide range of outputs in a stack configuration by stacking unit cells, and it is attracting attention as a small and mobile portable power source since it shows an energy density 4 to 10 times that of a small lithium battery.

A stack that actually generates electricity in a fuel cell has a structure in which several to dozens of unit cells composed of a membrane-electrode assembly (MEA) and a separator (or called a bipolar plate also) are stacked, and the membrane-electrode assembly generally has a structure in which an oxidizing electrode (anode or fuel electrode) and a reducing electrode (cathode or air electrode) are respectively formed on both sides of an electrolyte membrane interposed therebetween.

Fuel cells may be classified into alkaline electrolyte fuel cells, polymer electrolyte membrane fuel cells (PEMFC), etc. depending on the state and type of electrolyte, and the polymer electrolyte membrane fuel cells among them are spotlighted as a portable vehicle and home power supply due to its advantages such as a low operating temperature of less than 100°C, fast start-up and response characteristics, and excellent durability.

Typical examples of the polymer electrolyte membrane fuel cells may include a proton exchange membrane fuel cell (PEMFC) that uses hydrogen gas as fuel, a direct methanol fuel cell (DMFC) that uses liquid methanol as fuel, etc.

Conventionally, a polymer electrolyte membrane fuel cell (PEMFC) and a membrane-electrode assembly (MEA) are composed of an anode electrode, a cathode electrode, and a polymer electrolyte membrane (PEM) disposed between the anode and cathode electrodes. The oxidation reaction of fuel occurs at the anode electrode to which hydrogen or fuel is supplied, the hydrogen ions generated at the anode electrode are conducted to the cathode electrode through the electrolyte membrane, and the reduction reaction of oxygen occurs at the cathode electrode to which oxygen is supplied, thereby generating a voltage difference between the two electrodes so that electricity is generated.

The anode electrode of the fuel cell includes a catalyst for promoting a reaction for generating hydrogen ions by oxidizing fuel, and the cathode electrode includes a catalyst for promoting reduction of oxygen. A fuel cell catalyst mainly consists of catalytic metal particles and a carrier having high electrical conductivity for uniformly dispersing them. In general, catalysts containing platinum (Pt) as an active component are used as components of anode and cathode electrodes.

However, platinum-based catalysts account for a large portion of the total fuel cell production cost due to their low reserves and high price, thereby becoming an obstacle limiting mass production and commercialization of fuel cells. In particular, PEMFCs of platinum-based catalysts mainly use platinum for both the anode and the cathode, and these catalysts account for an extent corresponding to 40 to 50% of the total cost of the PEMFC stack. Therefore, there is an urgent need to develop a non-noble metal-based catalyst that can replace platinum.

KR 2011 0070353 A discloses non-platinum cathode catalyst having good oxygen reduction activity and good durability, a fuel cell electrode including the catalyst, and a polymer electrolyte fuel cell comprising the fuel cell electrode. The non-platinum cathode catalyst has a structure where transition metal nanoparticles are dispersed and fixed on a conductive carbon support surface-modified with a nitrogen-containing organic compound, wherein the transition metal is selected from the group consisting of Ti, V, Cr, Mn, Fe, Co, Ni, Cu, Zr, Nb, Mo, Tc, Ru, Rh, Pd, Ag, Hf, Ta, W, Re, Os, Ir, Au and alloys thereof.

Xu et al. (International Journal of Green Energy, 18(6) (2021), 566-577) is concerned with the construction of a graphene-contained layer between an anode catalyst layer and a membrane to reduce methanol crossover and to improve the performance of direct methanol fuel cells using high-concentration fuel. After adding Nafion^{®} ionomer binder to the graphene layer, the peak power density of an electrode fed with 8 M methanol reached 17.75 mW/cm², which was 82.69% higher than the peak power density of an electrode without any binder in the graphene layer.

### [Disclosure]

### [Technical Problem]

An object of the present invention is to provide a fuel cell electrode which has excellent efficiency without using a platinum-based catalyst.

Another object of the present invention is to provide a method for manufacturing the fuel cell electrode described above.

Another object of the present invention is to provide a membrane-electrode assembly having excellent efficiency without using platinum by including the fuel cell electrode.

Another object of the present invention is to provide a fuel cell in which the membrane-electrode assembly is included so that platinum is not contained.

The invention is defined by the claims.

### [Technical Solution]

In a first aspect, the invention thus relates to a fuel cell electrode as defined in claim 1. The fuel cell electrode includes: a catalyst layer including a non-platinum catalyst complex and a conductive polymer; and a graphene layer made of one or more of graphene and graphene oxide, wherein the catalyst layer and the graphene layer are alternately stacked, the catalyst layer and the graphene layer have a multilayer structure of 3 to 200 layers. In this case, the non-platinum catalyst complex includes a carbon support, and a non-platinum transition metal and nitrogen which are formed on the carbon support, and specifically, the non-platinum catalyst complex may have an active site which is formed by a coordination bond between the non-platinum transition metal and nitrogen and exists therein.

The catalyst layer may have a form in which the conductive polymer is coated on the surface of the non-platinum catalyst complex.

The non-platinum catalyst complex may be prepared by mixing the carbon support and an M-N precursor containing a non-platinum transition metal (M) and nitrogen (N) at a mass ratio of 1:1 to 1:5.

The non-platinum catalyst complex and the conductive polymer may be included in the catalyst layer at a mass ratio of 1:20 to 5:1.

The non-platinum catalyst complex may be formed from an M-N precursor, and the M-N precursor may include a nitrogen-containing macrocyclic compound including a metal-nitrogen coordination, and the nitrogen-containing macrocyclic compound including a metal-nitrogen coordination may include, for example, one or more of porphyrin, phthalocyanine, corrole, cyclam, tetraazaannulene, and derivatives thereof. In addition, the M-N precursor may include the non-platinum transition metal, and may include one or more of Fe, Co, and Mn.

The carbon support may include one or more from the group consisting of carbon black, graphene, graphene oxide, carbon nanofibers, and carbon nanotubes.

The conductive polymer may include one or more of polyacetylene, polypyrrole, polyaniline, polythiophene, and perfluorosulfonic acid.

The catalyst layer may have a thickness of 1 to 200 nm.

In a second aspect, the invention relates to a method of manufacturing a fuel cell as defined in claim 12. The method comprises the steps of (a) drying and heat-treating a dispersion containing a non-platinum catalyst complex and a conductive polymer to obtain a non-platinum catalyst complex coated with the conductive polymer; (b) forming a graphene layer by applying a dispersion containing one or more of graphene and graphene oxide; (c) forming a catalyst layer by applying a dispersion containing the non-platinum catalyst complex coated with the conductive polymer of the step (a); and (d) forming a multilayer structure in which the graphene layer and the catalyst layer are alternately stacked by repeating the steps (b) and (c) two or more times, respectively. The step (a) is performing drying at 60 to 150°C and performing heat treatment at a temperature of 300 to 900°C, the space is formed between the graphene layer and the catalyst layer during the stacking of the step (d), and the application in the step (b) or (c) is performed by ultrasonic spray.

In a third aspect, the invention relates to a membrane-electrode assembly for a fuel cell as defined in claim 13. The membrane-electrode assembly includes the fuel cell electrode of the first aspect and a polymer electrolyte membrane, wherein the fuel cell electrode is a cathode electrode.

In a fourth aspect, the invention relates to a fuel cell as defined in claim 14. The fuel cell includes the membrane-electrode assembly for a fuel cell of the third aspect.

### [Advantageous Effects]

The fuel cell electrode of the present invention is a structure in which a catalyst layer and a graphene layer are stacked, and the catalyst layer can realize excellent electrode efficiency through a relatively inexpensive transition metal without using platinum as a catalyst.

Further, the conductive polymer used together in the catalyst layer can improve the efficiency of the non-platinum catalyst by limiting the size of the transition metal particles.

In addition, the graphene layer is alternately laminated with the catalyst layer, and the active point can be maximally exposed on the reaction surface through the multi-layer structure formed thereby, and the graphene layer can not only improve the conductivity of the electrode, but also improve performance and durability of the fuel cell by forming an empty space between the catalyst particles to provide a smooth material transfer passage during driving of the fuel cell.

### [Description of Drawings]

FIG. 1 is a schematic diagram briefly showing a laminated structure of an electrode according to one embodiment of the present invention.
FIG. 2 is a graph comparing performances of fuel cells including membrane-electrode assemblies according to Examples, Reference Example, and Comparative Example of the present application.
FIG. 3 is a schematic diagram showing an overall configuration of the fuel cell.

### [Best Mode for Carrying Out the Invention]

Hereinafter, embodiments of the present invention will be described in detail with reference to the drawings so that those skilled in the art to which the present invention pertains can easily carry out the present invention.

The fuel cell electrode of the present invention is characterized in that it has a structure in which a catalyst layer that does not contain expensive platinum (Pt), which is generally used in fuel cell electrodes, and a graphene layer including graphene are alternately stacked.

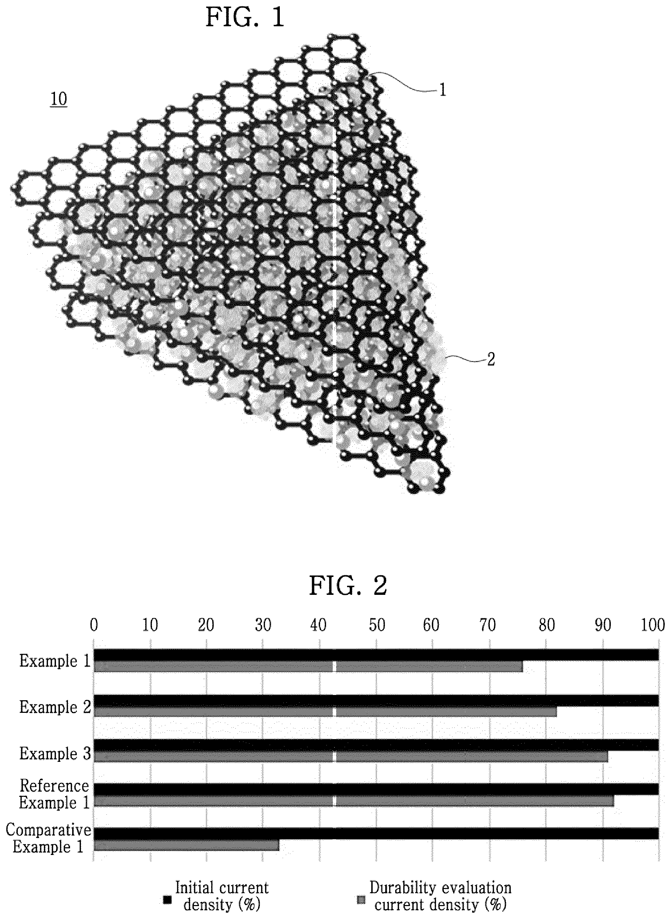

FIG. 1 is a schematic diagram briefly showing a laminated structure of an electrode 10 according to one embodiment of the present invention. Referring to FIG. 1, it may be a laminated structure in which the catalyst layer 2 and the graphene layer 1 exist in plurality in one electrode 10, and the catalyst layer 2 and the graphene layer 1 are alternately stacked.

The catalyst layer includes a non-platinum catalyst complex and a conductive polymer together instead of ones made from expensive platinum. The non-platinum catalyst complex includes a carbon support, and a non-platinum transition metal and nitrogen which are formed on the carbon support. Here, the metal catalyst is a non-platinum transition metal, meaning a transition metal except for platinum, and may preferably be a non-precious metal-based transition metal. In addition, the carbon support may include, for example, one or more of carbon black, graphene, graphene oxide, carbon nanofibers, and carbon nanotubes. In addition, nitrogen may be in a form which is included in a nitrogen-containing macrocyclic organic compound.

Specifically, the non-platinum catalyst complex forms an active site formed by a coordination bond between a non-platinum transition metal and nitrogen, and this can be expressed that an active site composed of an M (non-platinum transition metal)-Nx coordination is present. When heat treatment is performed at high temperatures for the preparation of an M-N-C-based electrode catalyst having a high oxygen reduction reaction level, large metal catalyst particles that cause performance degradation may be formed. In order to prevent this, a conductive polymer may be included in addition to the non-platinum catalyst complex, thereby limiting the size of the non-platinum transition metal and further improving the conductivity of the electrode.

The non-platinum catalyst complex may be coated with a conductive polymer, and specifically, it may be a form in which the conductive polymer is coated on the surface of the non-platinum catalyst complex through heat treatment after the conductive polymer covers the non-platinum catalyst complex.

The non-platinum catalyst complex is preferably prepared by mixing the carbon support and the M-N precursor containing the non-platinum transition metal (M) and nitrogen (N) at a mass ratio of 1:1 to 1:5. When the ratio of the carbon support is small compared to the above-described range, large metal catalyst particles that cause performance degradation may be formed when heat treatment is performed at high temperatures in order to form a non-platinum catalyst complex, and there may be a problem in that catalyst efficiency is lowered when the ratio of the carbon support is higher than the above-described range.

In the catalyst layer, the non-platinum catalyst complex and the conductive polymer are preferably included at a mass ratio of 1:20 to 5:1. In this case, the mass ratio may be independent of each of the plurality of catalyst layers in the electrode. When the mass ratio of the non-platinum catalyst complex is lower than the above-described mass ratio, the catalytic reaction may not occur smoothly in the electrode, and when the mass ratio of the conductive polymer is lower than the above-described mass ratio, the conductive polymer is lost in the heat treatment process, and catalytic activity and durability degradation may occur due to particle agglomeration of the transition metal exposed accordingly.

The non-platinum catalyst complex may be formed from an M-N precursor containing a non-platinum transition metal (M) and nitrogen (N), and in this case, the M-N precursor may include a nitrogen-containing macrocyclic organic compound including a metal-nitrogen coordination, and the nitrogen-containing macrocyclic organic compound including the metal-nitrogen coordination is not particularly limited as long as it can coordinately bond with the transition metal. The nitrogen-containing macrocyclic organic compounds including the metal-nitrogen coordination may include, for example, one or more of porphyrin, phthalocyanine, corrole, cyclam, tetraazaannulene, and derivatives thereof. In this case, tetraaza annulene may be specifically tetraaza[14]annulene.

The non-platinum transition metal of the M-N precursor is coordination-bonded with the macrocyclic organic compound to form an M-Nx site in the preparation process, and this will be an important configuration for realizing high activity of the non-platinum catalyst complex provided in the present invention. The type of transition metal is not particularly limited, and may preferably include one or more transition metals of Fe, Co, and Mn.

The conductive polymer may be any conductive polymer commonly used in fuel cells, and may preferably include one or more of polyacetylene, polypyrrole, polyaniline, polythiophene, and perfluorosulfonic acid.

Preferably, the catalyst layer including the non-platinum catalyst complex and the conductive polymer has a thickness of 1 to 200 nm. If the thickness of the catalyst layer is too thick or thin compared to the above-described range, the ability to supply fuel or discharge water in the electrode may deteriorate, and thus there may be a problem in that the efficiency of the fuel cell decreases. In addition, the plurality of catalyst layers in the electrode may each independently have a thickness within the above-described thickness range.

In the graphene layer, each of the plurality of graphene layers in the electrode may independently include one or more of graphene and graphene oxide. When the fuel cell electrode of the present invention is used in the cathode electrode, in order to discharge water generated by driving of the fuel cell and maintain the wetness of the electrolyte membrane side, the graphene layer of the polymer electrolyte membrane layer in the cathode electrode may be made of hydrophilic graphene oxide for maintenance of the wettability of the electrolyte membrane, and may be made of water-repellent graphene for smooth discharge of water to the opposite side.

The fuel cell electrode is a structure in which a plurality of catalyst layers and a plurality of graphene layers are alternately stacked.

At this time, the total number of layers of the catalyst layer and the graphene layer in the electrode is three or more layers and, since the thickness of the electrode in which the catalyst layer and the graphene layer are excessively stacked may become excessively thick, within 200 layers. That is, the total number of layers of the catalyst layer and the graphene layer is 3 to 200 layers, for example, 10 to 200 layers, 50 to 150 layers, and the like. According to one embodiment, when the total number of layers of the catalyst layer and the graphene layer is three layers, it may be a structure which stacked in the order of the catalyst layer-graphene layer-catalyst layer, but is not limited to the above example. In addition, as another example, the stacked structure may be formed by repeating the pattern two or more times in the order of catalyst layer-graphene layer-catalyst layer-graphene oxide layer. Here, the graphene layer may be a layer formed of a single layer of graphene or a layer formed of two or more layers of graphene.

According to the present invention, the catalytic active point may be maximally exposed to the reaction surface by the multi-layered structure of the catalyst layer and the graphene layer, and accordingly, the catalytic efficiency may be improved so that the electrode performance may become excellent.

In addition, according to the present invention, the space may be formed between the catalyst layer and the graphene layer that have been stacked. Through the space, materials such as oxygen as a reactant and water as a product in the catalyst layer may be smoothly transferred and moved. According to one embodiment of the present invention, the space may have a pore structure. Here, the volume of the space, specifically, the porosity may be in a range of about 0.1 to about 95% by volume. In addition, according to one embodiment of the present invention, the space may or may not be partially or completely filled with an ionomer described later.

The catalyst layer may include an ionomer. According to one embodiment, the ionomer may fill at least a part of the space between the catalyst layer and the graphene layer.

The ionomer may include one or more ionomers selected from the group consisting of fluorine-based ionomers and hydrocarbon-based ionomers. The hydrocarbon-based ionomers may include all known hydrocarbon-based polymers, and may be, for example, sulfonated derivatives of poly(arylene ether)s (SPAEs), poly(arylene sulfide)s (SPASs), polyimides (SPIs), polybenzimidazoles (PBIs), polyphenylenes (PPs), and polyetheretherketone (PEEK). In addition, the fluorine-based ionomers may include all known fluorine-based polymers, and may be, for example, one of perfluorine-based sulfonic acid-based polymers such as Nafion, Aciplex, and Flemion, polyvinylidene fluoride, hexafluoropropylene, trifluoroethylene, polytetrafluoroethylene, or copolymers thereof.

The method for manufacturing a fuel cell electrode of the present invention includes the steps of: (a) drying and heat-treating a dispersion containing a non-platinum catalyst complex and a conductive polymer to obtain a non-platinum catalyst complex coated with the conductive polymer; (b) forming a graphene layer by applying a dispersion containing one or more of graphene and graphene oxide; (c) forming a catalyst layer by applying a dispersion containing the non-platinum catalyst complex coated with the conductive polymer of the step (a); and (d) forming a multilayer structure in which the graphene layer and the catalyst layer are alternately stacked by repeating the steps (b) and (c) two or more times, respectively.

In the step (a), the drying temperature and time may be appropriately adjusted by those skilled in the art in consideration of the content or the like of the dispersion solvent in the dispersion. According to the invention, the drying is performed at a temperature of 60 to 150°C, and coating of the conductive polymer on the non-platinum catalyst complex may be smoothly performed and a strong bond may be formed by setting the drying temperature within the above-described range.

In addition, the heat treatment temperature and time in the step (a) may be appropriately adjusted by those skilled in the art in consideration of the type or the like of conductive polymer. According to the invention, the heat treatment is performed at a temperature of 300 to 900°C, and a bond between the non-platinum catalyst complex and the conductive polymer may be well formed by setting the heat treatment temperature within the above-described range.

In the step (a), the non-platinum catalyst complex may be prepared by mixing the aforementioned carbon support, the non-platinum transition metal, and a nitrogen-containing organic compound. Therefore, according to one embodiment of the present invention, the method for manufacturing a fuel cell electrode may further include a step of preparing a non-platinum catalyst complex by mixing a carbon support, a non-platinum transition metal, and a nitrogen-containing organic compound. The types and mixing mass ratios of the carbon support, the non-platinum transition metal, and the nitrogen-containing organic compound are previously described. The non-platinum catalyst complex may be obtained in the form of a powder, and prior to the subsequent application step (step (c)), it may be dispersed in a dispersion solvent to form a dispersion, and then applied in the application step.

The application method in the steps (b) and (c) is performed by ultrasonic spray. The ultrasonic spray is used, and thus materials such as graphene or non-platinum catalyst complexes may be uniformly and effectively sprayed and fixed, and the coating thickness may also be easily controlled. Conditions for the ultrasonic spray are not particularly limited, and the coating thickness and particle volume may be adjusted depending on the nozzle size, the solid concentration in the spray solution, the ultrasonic intensity, and the like. For example, the ultrasonic frequency range may be 100 to 300 kHz, and the larger the ultrasonic frequency range (kHz), the smaller the particle volume of the sprayed solution tends to be.

Since stacking is performed in the step (d), a space is formed between the graphene layer and the catalyst layer. Regarding the space, reference is made to what has been previously described in relation to the electrode.

A membrane-electrode assembly for a fuel cell according to the present invention includes the fuel cell electrode according to the present invention as a cathode electrode, and includes a polymer electrolyte membrane.

The fuel cell of the present invention includes the membrane-electrode assembly of the present invention.

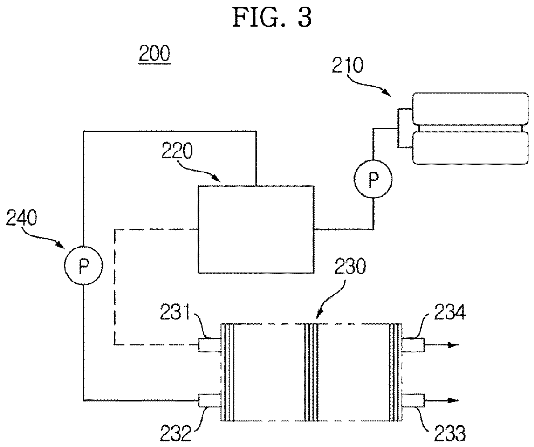

FIG. 3 is a schematic diagram showing an overall configuration of the fuel cell.

Referring to FIG. 3, the fuel cell 200 includes a fuel supply unit 210 for supplying mixed fuel in which fuel and water are mixed, a reforming unit 220 for generating reformed gas containing hydrogen gas by reforming the mixed fuel, a stack 230 which generates electrical energy by causing an electrochemical reaction between the reformed gas containing hydrogen gas supplied from the reforming unit 220 and an oxidizing agent, and an oxidizing agent supply unit 240 for supplying the oxidizing agent to the reforming unit 220 and the stack 230.

The stack 230 includes a plurality of unit cells generating electrical energy by inducing an oxidation/reduction reaction of a reformed gas containing hydrogen supplied from the reforming unit 220 and an oxidizing agent supplied from the oxidizing agent supply unit 240.

Each unit cell means a unit cell that generates electricity, and includes a membrane-electrode assembly for oxidizing/reducing oxygen in a hydrogen gas-containing reformed gas and an oxidizing agent, and separators (also called bipolar plates, hereinafter referred to as 'separators') for supplying the hydrogen gas-containing reformed gas and the oxidizing agent to the membrane-electrode assembly. The separators are placed on both sides of the membrane-electrode assembly which is located in the center therebetween. At this time, the separators respectively located on the outermost sides of the stack are particularly referred to as end plates.

One end plate of the separators includes a pipe-shaped first supply pipe 231 for injecting a reformed gas containing hydrogen gas supplied from the reforming unit 220 and a pipe-shaped second supply pipe 232 for injecting oxygen gas, and the other end plate thereof includes a first discharge pipe 233 for discharging a reformed gas containing hydrogen gas that has finally been unreacted in a plurality of unit cells and remain to the outside and a second discharge pipe 234 for discharging an oxidizing agent that has finally been unreacted in the above-described unit cells and remained to the outside.

In the fuel cell, since the separators, fuel supply unit, and oxidizing agent supply unit constituting the electricity generation unit are used in a conventional fuel cell that does not include the membrane-electrode assembly of the present invention is used, detailed descriptions in this specification are omitted.

### [Mode for Carrying Out the Invention]

Hereinafter, embodiments of the present disclosure will be described in detail so that those skilled in the art to which the present invention pertains can easily implement the present invention.

### [Manufacturing Example: Manufacturing of Membrane-Electrode Assembly]

### (Example 1)

A non-platinum catalyst complex was prepared by mixing CNT as a carbon support and iron(III) phthalocyanine chloride as an Fe-N precursor (M-N precursor) at a mass ratio of 1:2. Then, a dispersion containing the prepared non-platinum catalyst complex and an aniline monomer at a mass ratio of 2:1 and using distilled water as a solvent was dried at 60°C for 8 hours to obtain a solid powder.

The powder obtained through the drying was heat-treated at a temperature of 800°C for 3 hours under a nitrogen atmosphere, and a catalyst dispersion was prepared from this using Nafion, a perfluorine-based sulfonic acid ionomer, distilled water, and normal-propyl alcohol.

In the ultrasonic spray, the graphene dispersion was injected into the first nozzle, and the catalyst dispersion was injected into the second nozzle.

After spraying and drying the first nozzle on a release material of fluorinated ethylene propylene (FEP) to form a graphene layer, the second nozzle was sprayed and dried on the formed graphene layer to form a catalyst layer, a graphene layer was formed on the formed catalyst layer in the same manner, an electrode layer was formed by alternately forming the catalyst layer and the graphene layer one by one in this way, and the total number of layers of the catalyst layer and the graphene layer in the electrode layer was 100 layers.

In the ultrasonic spray, the size of the mist may be controlled by adjusting the frequency of the dispersion, and in this embodiment, a mist having a size of about 10 µm was produced by applying an ultrasonic frequency of 180 kHz. The coating was performed under the conditions of a syringe pump flow rate of about 1 ml/min, a nozzle moving speed of 10 m/s, and an air pressure of 4 L/min.

A membrane-electrode assembly was manufactured by applying the formed electrode layer as a cathode electrode part and applying a Pt/C electrocatalyst as an anode electrode part and thermally compressing them to the polymer electrolyte membrane.

### (Example 2)

A membrane-electrode assembly was manufactured in the same manner except that the Fe-N precursor was changed to a Co-N precursor in Example 1.

### (Example 3)

A membrane-electrode assembly was manufactured in the same manner except that the Fe-N precursor was changed to an Mn-N precursor in Example 1.

### [Experimental Example: Performance Comparison of Membrane-Electrode Assemblies]

In order to compare the performances of Examples 1 to 3 manufactured in the above Manufacturing Example, membrane-electrode assemblies were manufactured under the conditions as shown in Table 1 below by performing the cathode catalyst loading and anode catalyst loading on Reference Example 1 including an electrode including a platinum-based catalyst supported on a carbon support in the cathode electrode part according to the conventional technology and Comparative Example 1 including an electrode formed as a single layer of a dispersion in which the Fe-N precursor disclosed herein, perfluorine-based sulfonic acid, and graphene are all mixed without a graphene layer and a catalyst layer being distinguished.

**[Table 1]**

| | Cathode catalyst loading (mg/cm²) | Anode catalyst loading (mgPt/cm²) |
|---|---|---|
| Example 1 | 4.0 | 0.2 |
| Example 2 | 4.0 | 0.2 |
| Example 3 | 4.0 | 0.2 |
| Reference Example 1 | 0.8 | 0.2 |
| Comparative Example 1 | 4.0 | 0.2 |

For Examples 1 to 3, Reference Example 1, and Comparative Example 1, the initial performances of the membrane-electrode assemblies under conditions of supplying the cathode fuel to oxygen or air were evaluated and shown in Table 2 below. Performance evaluation was performed under the conditions of a temperature of 65°C, an air pressure of 100 kPa, a relative humidity of 100%, and a hydrogen/air flow rate ratio of 1.5/2.0.

**[Table 2]**

| | Maximum power density mW/cm ² (H₂/O₂) | Maximum power density mW/cm² (H₂/Air) |
|---|---|---|
| Example 1 | 1,000 | 660 |
| Example 2 | 920 | 575 |
| Example 3 | 880 | 515 |
| Reference Example 1 | 1,200 | 996 |
| Comparative Example 1 | 520 | 260 |

The durability results of fuel cells including the membrane-electrode assemblies of Examples 1 to 3, Reference Example 1, and Comparative Example 1 manufactured in the configurations shown in Table 1 were compared and shown in FIG. 2. The graph of FIG. 2 compares the current density reduction levels before and after the durability evaluation for 100 hours at a constant voltage of 0.7 V under the same evaluation conditions as in Table 2.

Referring to Tables 1 and 2, the cathode catalyst loading values of the Examples which do not use platinum were shown to be higher than that of Reference Example 1 which uses a platinum catalyst, but when applied to a fuel cell, the maximum power densities of the Examples which do not use platinum did not show a significant difference compared to that of Reference Example 1 which uses the platinum catalyst. From this, it can be seen that the catalyst disclosed herein can realize performance similar to that of one that uses platinum even without using platinum, which is an expensive rare metal.

Specifically, referring to Table 2 and FIG. 2, when comparing Examples 1 to 3 manufactured according to the present invention and Reference Example 1 manufactured using a conventional platinum-based catalyst, it can be seen that high levels of the oxygen reduction reaction (ORR) performance and durability similar to those of the platinum-based catalyst are shown.

In addition, when comparing Example 1 with Comparative Example 1 manufactured by mixing the same composition without layer distinction, Comparative Example 1 does not form a pore structure, whereas it can be seen that Example 1 shows excellent performance and durability in which the mass transfer of oxygen as a reactant and water as a product is smooth by exposing catalytically active sites to the reaction surface as much as possible through a multilayer structure and forming a pore structure at the same time.

In addition, through the comparison of Examples 1 to 3, it can be seen that the durability may be further improved depending on the selection of the M-N precursor.

Although the preferred embodiments of the present invention have been described in detail above, the invention is not limited thereto, and various modifications can be made within the scope of the claims.

### (Description of reference numerals)

1: Graphene layer
2: Catalyst layer
10: Electrode
200: Fuel cell
210: Fuel supply unit
220: Reforming unit
230: Stack
231: First supply pipe
232: Second supply pipe
233: First discharge pipe
234: Second discharge pipe
240: Oxidizing agent supply unit

## Claims

1. A fuel cell electrode (10) comprising:
a catalyst layer (2) containing a non-platinum catalyst complex and a conductive polymer; and
a graphene layer (1) made of one or more of graphene and graphene oxide,
wherein the catalyst layer (2) and the graphene layer (1) are alternately stacked,
wherein the catalyst layer (2) and the graphene layer (1) have a multilayer structure of 3 to 200 layers, and
wherein the non-platinum catalyst complex comprises a carbon support, and a non-platinum transition metal and nitrogen which are formed on the carbon support.

2. The fuel cell electrode (10) of claim 1, wherein the non-platinum catalyst complex has an active site which is formed by a coordination bond between the non-platinum transition metal and nitrogen and exists therein.

3. The fuel cell electrode (10) of claim 1, wherein the conductive polymer is coated on the surface of the non-platinum catalyst complex.

4. The fuel cell electrode (10) of claim 1, wherein the space is formed between the catalyst layer (2) and the graphene layer (1) that have been stacked.

5. The fuel cell electrode (10) of claim 4, wherein the space has an ionomer filled in at least a part thereof.

6. The fuel cell electrode (10) of claim 1, wherein the non-platinum catalyst complex is prepared by mixing the carbon support and an M-N precursor containing a non-platinum transition metal (M) and nitrogen (N) at a mass ratio of 1:1 to 1:5.

7. The fuel cell electrode (10) of claim 1, wherein the non-platinum catalyst complex and the conductive polymer are contained in the catalyst layer (2) at a mass ratio of 1:20 to 5:1.

8. The fuel cell electrode (10) of claim 1, wherein the non-platinum catalyst complex is formed from a precursor comprising one or more of porphyrin, phthalocyanine, corrole, cyclam, tetraazaannulene, and derivatives thereof.

9. The fuel cell electrode (10) of claim 1, wherein the non-platinum transition metal includes one or more of Fe, Co, and Mn.

10. The fuel cell electrode (10) of claim 1, wherein the carbon support includes one or more of carbon black, graphene, graphene oxide, carbon nanofibers, and carbon nanotubes,
wherein the conductive polymer includes one or more of polyacetylene, polypyrrole, polyaniline, polythiophene, and perfluorosulfonic acid.

11. The fuel cell electrode (10) of claim 1, wherein the catalyst layer (2) has a thickness of 1 to 200 nm.

12. A method for manufacturing a fuel cell electrode (10), the method comprising the steps of:
(a) drying and heat-treating a dispersion containing a non-platinum catalyst complex and a conductive polymer to obtain a non-platinum catalyst complex coated with the conductive polymer;
(b) forming a graphene layer (1) by applying a dispersion containing one or more of graphene and graphene oxide;
(c) forming a catalyst layer (2) by applying a dispersion containing the non-platinum catalyst complex coated with the conductive polymer of the step (a); and
(d) forming a multilayer structure in which the graphene layer (1) and the catalyst layer are alternately (2) stacked by repeating the steps (b) and (c) two or more times, respectively,
wherein the step (a) is performing drying at 60 to 150°C and performing heat treatment at a temperature of 300 to 900°C,
wherein the space is formed between the graphene layer (1) and the catalyst layer (2) during the stacking of the step (d), and
wherein the application in the step (b) or (c) is performed by ultrasonic spray.

13. A membrane-electrode assembly for a fuel cell, comprising:
the fuel cell electrode (10) according to any one of claims 1 to 11; and
a polymer electrolyte membrane,
wherein the fuel cell electrode (10) is a cathode electrode.

14. A fuel cell (200) comprising the membrane-electrode assembly for a fuel cell of claim 13.

## Patentansprüche

1. Eine Brennstoffzellenelektrode (10), umfassend:
eine Katalysatorschicht (2), die einen Nicht-Platin-Katalysatorkomplex und ein leitfähiges Polymer enthält; und
eine Graphenschicht (1) aus einem oder mehreren von Graphen und Graphenoxid,
wobei die Katalysatorschicht (2) und die Graphenschicht (1) abwechselnd gestapelt sind,
wobei die Katalysatorschicht (2) und die Graphenschicht (1) eine Mehrschichtstruktur aus 3 bis 200 Schichten aufweisen und
wobei der Nicht-Platin-Katalysatorkomplex einen Kohlenstoffträger, sowie ein Nicht-Platin-Übergangsmetall und Stickstoff, die auf dem Kohlenstoffträger gebildet sind,
umfasst.

2. Die Brennstoffzellenelektrode (10) nach Anspruch 1, wobei der Nicht-Platin-Katalysatorkomplex eine aktive Stelle aufweist, die durch eine Koordinationsbindung zwischen dem Nicht-Platin-Übergangsmetall und Stickstoff gebildet ist und darin vorliegt.

3. Die Brennstoffzellenelektrode (10) nach Anspruch 1, wobei das leitfähige Polymer auf der Oberfläche des Nicht-Platin-Katalysatorkomplexes aufgebracht ist.

4. Die Brennstoffzellenelektrode (10) nach Anspruch 1, wobei der Hohlraum zwischen der Katalysatorschicht (2) und der Graphenschicht (1), die gestapelt wurden, gebildet ist.

5. Die Brennstoffzellenelektrode (10) nach Anspruch 4, wobei der Hohlraum in zumindest einem Teil desselben mit einem lonomer gefüllt ist.

6. Die Brennstoffzellenelektrode (10) nach Anspruch 1, wobei der Nicht-Platin-Katalysatorkomplex durch Mischen des Kohlenstoffträgers und eines M-N-Vorläufers, der ein Nicht-Platin-Übergangsmetall (M) und Stickstoff (N) enthält, in einem Massenverhältnis von 1:1 bis 1:5 hergestellt wird.

7. Die Brennstoffzellenelektrode (10) nach Anspruch 1, wobei der Nicht-Platin-Katalysatorkomplex und das leitfähige Polymer in der Katalysatorschicht (2) in einem Massenverhältnis von 1:20 bis 5:1 enthalten sind.

8. Die Brennstoffzellenelektrode (10) nach Anspruch 1, wobei der Nicht-Platin-Katalysatorkomplex aus einem Vorläufer gebildet ist, der eines oder mehrere von Porphyrin, Phthalocyanin, Corrol, Cyclam, Tetraazaannulen und Derivaten davon umfasst.

9. Die Brennstoffzellenelektrode (10) nach Anspruch 1, wobei das Nicht-Platin-Übergangsmetall eines oder mehrere von Fe, Co und Mn beinhaltet.

10. Die Brennstoffzellenelektrode (10) nach Anspruch 1, wobei der Kohlenstoffträger eines oder mehrere von Ruß, Graphen, Graphenoxid, Kohlenstoffnanofasern und Kohlenstoffnanoröhrchen beinhaltet,
wobei das leitfähige Polymer eines oder mehrere von Polyacetylen, Polypyrrol, Polyanilin, Polythiophen und Perfluorsulfonsäure beinhaltet.

11. Die Brennstoffzellenelektrode (10) nach Anspruch 1, wobei die Katalysatorschicht (2) eine Dicke von 1 bis 200 nm aufweist.

12. Ein Verfahren zur Herstellung einer Brennstoffzellenelektrode (10), wobei das Verfahren die Schritte umfasst:
(a) Trocknen und Wärmebehandeln einer Dispersion, die einen Nicht-Platin-Katalysatorkomplex und ein leitfähiges Polymer enthält, um einen Nicht-Platin-Katalysatorkomplex zu erhalten, der mit dem leitfähigen Polymer beschichtet ist;
(b) Bilden einer Graphenschicht (1) durch Aufbringen einer Dispersion, die eines oder mehrere von Graphen und Graphenoxid enthält;
(c) Bilden einer Katalysatorschicht (2) durch Aufbringen einer Dispersion, die den mit dem leitfähigen Polymer des Schritts (a) beschichteten Nicht-Platin-Katalysatorkomplex enthält; und
(d) Bilden einer Mehrschichtstruktur, in der die Graphenschicht (1) und die Katalysatorschicht (2) abwechselnd durch zwei- bzw. mehrmaliges Wiederholen der Schritte (b) und (c) gestapelt werden,
wobei der Schritt (a) Durchführen von Trocknen bei 60 bis 150°C und Durchführen von Wärmebehandlung bei einer Temperatur von 300 bis 900°C ist,
wobei der Hohlraum zwischen der Graphenschicht (1) und der Katalysatorschicht (2) während des Stapelns des Schritts (d) gebildet wird und
wobei das Aufbringen in dem Schritt (b) oder (c) durch Ultraschallspray durchgeführt wird.

13. Eine Membran-Elektroden-Anordnung für eine Brennstoffzelle, umfassend:
die Brennstoffzellenelektrode (10) nach einem der Ansprüche 1 bis 11; und
eine Polymerelektrolytmembran,
wobei die Brennstoffzellenelektrode (10) eine Kathodenelektrode ist.

14. Eine Brennstoffzelle (200), umfassend die Membran-Elektroden-Anordnung für eine Brennstoffzelle nach Anspruch 13.

## Revendications

1. Electrode de pile à combustible (10) comprenant :
une couche de catalyseur (2) contenant un complexe de catalyseur sans platine et un polymère conducteur ; et
une couche de graphène (1) faite d'un ou plusieurs parmi le graphène et l'oxyde de graphène,
dans laquelle la couche de catalyseur (2) et la couche de graphène (1) sont empilées en alternance,
dans laquelle la couche de catalyseur (2) et la couche de graphène (1) ont une structure multicouche de 3 à 200 couches, et
dans laquelle le complexe de catalyseur sans platine comprend un support de carbone, et un métal de transition non platine et de l'azote qui sont formés sur le support de carbone.

2. Electrode de pile à combustible (10) selon la revendication 1, dans laquelle le complexe de catalyseur sans platine a un site actif qui est formé par une liaison de coordination entre le métal de transition non platine et l'azote et existe à l'intérieur de celle-ci.

3. Electrode de pile à combustible (10) selon la revendication 1, dans laquelle le polymère conducteur est déposé sous forme de revêtement sur la surface du complexe de catalyseur sans platine.

4. Electrode de pile à combustible (10) selon la revendication 1, dans laquelle l'espace est formé entre la couche de catalyseur (2) et la couche de graphène (1) qui ont été empilées.

5. Electrode de pile à combustible (10) selon la revendication 4, dans laquelle l'espace a un ionomère remplissant au moins une partie de celui-ci.

6. Electrode de pile à combustible (10) selon la revendication 1, dans laquelle le complexe de catalyseur sans platine est préparé par mélange du support de carbone et d'un précurseur M-N contenant un métal de transition non platine (M) et de l'azote (N) en un rapport en masse de 1/1 à 1/5.

7. Electrode de pile à combustible (10) selon la revendication 1, dans laquelle le complexe de catalyseur sans platine et le polymère conducteur sont contenus dans la couche de catalyseur (2) en un rapport en masse de 1/20 à *5*/*1.*

8. Electrode de pile à combustible (10) selon la revendication 1, dans laquelle le complexe de catalyseur sans platine est formé à partir d'un précurseur comprenant un ou plusieurs parmi la porphyrine, la phtalocyanine, le corrole, le cyclam, le tétraazaannulène, et leurs dérivés.

9. Electrode de pile à combustible (10) selon la revendication 1, dans laquelle le métal de transition non platine inclut un ou plusieurs parmi Fe, Co et Mn.

10. Electrode de pile à combustible (10) selon la revendication 1, dans laquelle le support de carbone inclut un ou plusieurs parmi le noir de carbone, le graphène, l'oxyde de graphène, les nanofibres de carbone, et les nanotubes de carbone,
dans laquelle le polymère conducteur inclut un ou plusieurs parmi le polyacétylène, le polypyrrole, la polyanilline, le polythiophène, et l'acide perfluorosulfonique.

11. Electrode de pile à combustible (10) selon la revendication 1, dans laquelle la couche de catalyseur (2) a une épaisseur de 1 à 200 nm.

12. Méthode pour fabriquer une électrode de pile à combustible (10), la méthode comprenant les étapes de :
(a) séchage et traitement à la chaleur d'une dispersion contenant un complexe de catalyseur sans platine et un polymère conducteur pour que soit obtenu un complexe de catalyseur sans platine revêtu du polymère conducteur ;
(b) formation d'une couche de graphène (1) par application d'une dispersion contenant un ou plusieurs parmi le graphène et l'oxyde de graphène ;
(c) formation d'une couche de catalyseur (2) par application d'une dispersion contenant le complexe de catalyseur sans platine revêtu du polymère conducteur de l'étape (a) ; et
(d) formation d'une structure multicouche dans laquelle la couche de graphène (1) et la couche de catalyseur (2) sont empilées en alternance par répétition des étapes (b) et (c) deux fois ou plus, respectivement,
dans laquelle l'étape (a) met en œuvre un séchage à une température de 60 à 150 °C et met en œuvre un traitement à la chaleur à une température de 300 à 900 °C,
dans laquelle l'espace est formé entre la couche de graphène (1) et la couche de catalyseur (2) pendant l'empilement de l'étape (d), et
dans laquelle l'application dans l'étape (b) ou (c) est mise en œuvre au moyen d'une pulvérisation d'ultrasons.

13. Assemblage de membrane-électrodes pour une pile à combustible, comprenant :
l'électrode de pile à combustible (10) selon l'une quelconque des revendications 1 à 11 ; et
une membrane d'électrolyte polymère,
dans lequel l'électrode de pile à combustible (10) est une électrode cathode.

14. Pile à combustible (200) comprenant l'assemblage de membrane-électrodes pour une pile à combustible de la revendication 13.
